Europäisches Patentamt

European Patent Office

Office européen des brevets

(19)

(11) Veröffentlichungsnummer: **0 186 733 B1**

(12) **EUROPÄISCHE PATENTSCHRIFT**

(45) Veröffentlichungstag der Patentschrift: **03.07.91**

(51) Int. Cl.⁵: **E01F 1/00, E01F 9/04**

(21) Anmeldenummer: **85111723.4**

(22) Anmeldetag: **17.09.85**

(54) **Fahrdynamische Schwelle für Kraftverkehrswege.**

(30) Priorität: **21.09.84 DE 8427790 U**

(43) Veröffentlichungstag der Anmeldung:
**09.07.86 Patentblatt 86/28**

(45) Bekanntmachung des Hinweises auf die
Patenterteilung:
**03.07.91 Patentblatt 91/27**

(84) Benannte Vertragsstaaten:
**AT BE CH DE FR GB IT LI NL SE**

(56) Entgegenhaltungen:
EP-A- 0 024 736          DE-A- 2 905 769
DE-A- 3 213 423          DE-B- 1 190 160
DE-U- 8 221 169          DE-U- 8 312 556
DE-U- 8 427 790          GB-A- 2 030 197
GB-A- 2 104 946          US-A- 2 672 660

(73) Patentinhaber: **Stadtsparkasse Köln
Habsburgerring 2 - 12
W-5000 Köln 1(DE)**

(72) Erfinder: **Schäfer, Hartmut
Oberbuschweg 88
W-5000 Köln 50(DE)**

(74) Vertreter: **Bauer, Wulf, Dr.
Wolfgang-Müller-Strasse 12
W-5000 Köln 51 (Marienburg)(DE)**

EP 0 186 733 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine fahrdynamische Schwelle für Kraftverkehrswege nach dem Oberbegriff des Patentanspruchs 1.

Die aus der GB-A-2 104 946 vorbekannte fahrdynamische Schwelle der eingangs genannten Art ist als Temposchwelle ausgelegt, die in Größe und Form so gewählt ist, daß ein Kraftfahrzeug sicher die Geschwindigkeit auf einen gewünschten Wert reduziert. Die vorbekannte fahrdynamische Schwelle ist quer zur Richtung, in der sie überfahren wird, in modulare Blöcke aufgeteilt, die stumpf aneinander gesetzt sind. Diese einzelnen Blöcke bilden jeweils einstückig zwei Keilbereiche und einen dazwischen angeordneten Schwellenbereich aus. Der Schwellenbereich ist kürzer als die Keilbereiche. In die Keilbereiche sind Unterlagscheiben für eine Schraubenbefestigung eingebettet, weiterhin befinden sich in ihnen reflektierende Mittel.

Die vorbekannte fahrdynamische Schwelle ist nicht für einen Einsatz geeignet, bei dem der KFZ-Fahrstreifen durch Belagwechsel und Anheben in der Regel auf Bürgersteigniveau erhöht, auf der erreichten Höhe für eine gewisse Länge gehalten und anschließend wieder auf das ursprüngliche Fahrstreifenniveau abgesenkt wird. Derartige fahrdynamische Schwellen sind für Kreuzungsbereiche zwischen motorisiertem Fahrzeugverkehr und Fußgängern, also beispielsweise vor Schulen, Kindergärten, Kirchen, Krankenhäusern geeignet.

Zwar ist eine derartige fahrdynamische Schwelle ansich bekannt, die vorbekannte Schwelle ist jedoch aus Beton oder Betonpflastersteinen gefertigt und materialbedingt daher ohne jegliche Elastizität. Hierdurch kommt es insbesondere in den Keilbereichen, also in den Auffahr- oder Abfahrschrägen, zu Stößen, die sich auf das Kraftfahrzeug übertragen und sich auch lärmmäßig auf die Umgebung auswirken. Mitunter wird beim Überfahren sogar die Fahrstabilität des Kraftfahrzeugs derart beeinträchtigt, daß es zu Beschädigungen, beispielsweise Abriß der Auspuffanlage des Fahrzeugs, kommt. Darüberhinaus wird bei derartigen Schwellen, die auch Auframpungen genannt werden, der Fahrkomfort wahrnehmbar verringert, was beim Kraftfahrer nicht selten ein Unverständnis für die Verkehrsberuhigungsmaßnahme hervorruft.

Aus der DE-A-2 905 769 ist eine transportable Verkehrsinsel aus elastischem Material bekannt, die jedoch nicht dafür geeignet ist, in den Fluß des Kraftverkehrs einbezogen zu werden, also vom rollenden Kraftverkehr ständig überfahren zu werden.

Ausgehend von der vorbekannten fahrdynamischen Schwelle der eingangs genannten Art liegt der Erfindung die Aufgabe zugrunde, die bekannte fahrdynamische Schwelle dahingehend weiterzuentwickeln, daß Auframpungen für Kreuzungspunkte zwischen Kraftverkehr und Fußgängern in beliebiger Länge erstellt werden können.

Ausgehend von der fahrdynamischen Schwelle der eingangs genannten Art wird diese Aufgabe gelöst durch die Merkmale des Patentanspruchs 1.

Ein wichtiger Vorteil dieser Schwelle/Auframpung ist die universelle Einsetzbarkeit, durch das Baukastensystem können praktisch alle vorkommenden Breiten und Längen mit Serienteilen abgedeckt werden. Die erfindungsgemäße fahrdynamische Schwelle wird aus den genannten Rampenplatten sowie der mindestens einen Zwischenplatte und gegebenenfalls unter Verwendung anderer Platten aufgebaut. Aufgrund des Baukastenprinzips können Schwellen normal gebräuchlicher Abmessungen durch Verlegen und Montage am Einsatzort erstellt werden. Vorzugsweise sind die Unterflächen der Keilplatten und der Zwischenplatten jeweils Rechtecke, vorzugsweise bei den Zwischenplatten Quadrate. Aufgrund des benutzten Verlegungssystems lassen sich beschädigte Einzelplatten bequem und ausgesprochen rasch austauschen, da lediglich Schraubbefestigungen zu lösen sind und benachbarte Platten an ihrem Ort verbleiben können.

Durch den tangentialen Übergang der Fahrfläche des Keilbereichs in die ebene Fahrfläche des Schwellenbereichs wird eine Stoßübertragung auf ein Kraftfahrzeug dann, wenn ein Reifen beim Auffahren die Schwellenhöhe erreicht hat oder beim Herunterfahren die Schwellenhöhe verläßt, verringert. Ebenso kann in Nähe der Anfahrkante der Anfahrwinkel zunächst kleiner und erst anschließend, in einer gewissen Entfernung von der Anfahrkante, stetig größer gewählt werden.

Die Rampenplatten umfassen nicht nur ausschließlich Auf- oder Abfahrtschrägen, sondern auch einen Schwellenbereich mit ebener Fahrfläche, der 10 bis 80 % der Länge des Keilbereichs (in Richtung eines Fahrzeugs gesehen) beträgt. Hierdurch wird der kritische Übergangsbereich zwischen Auf- bzw. Abfahrtschräge und Fahrfläche der Schwelle in ein einziges Element, nämlich die Rampenplatte verlegt, hierdurch wird vermieden, daß unterschiedliche Belastungen beim Überfahren an den Stoßstellen auftreten, was zu einer Trennung einzelner Platten führen könnte.

Vorzugsweise liegt der Steigungswinkel des Keilbereichs zwischen fünf Grad und fünfzehn Grad, vorzugsweise zwischen sieben Grad und elf Grad. Derartig flache Auffahr- und Abbfahrschrägen können auch bei unzulässig hohen Geschwindigkeiten problemfrei und gefahrlos von Kraftfahrzeugen überrollt werden. Die bewußt angelegte Schwelle wird durchaus wahrgenommen, aber durch sie werden keine kritischen Verkehrssituationen verursacht.

Weitere Merkmale und Vorteile der Erfindung ergeben sich aus den übrigen Ansprüchen sowie der nun folgenden Beschreibung von nicht einschränkend zu verstehenden Ausführungsbeispielen, die unter Bezugnahme auf die Zeichnung im folgenden näher erläutert werden. In dieser zeigen:

Fig. 1      ein perspektivisches Montagebild eines Teils einer Schwelle mit einer Rampenplatte und vier Zwischenplatten,

Fig. 2      eine Draufsicht auf den Schwellenteil gemäß Fig. 1,

Fig. 3      eine Seitenansicht des Schwellenteils gemäß Figur 1,

Fig. 4      eine Draufsicht auf eine Schwelle,

Fig. 5      eine Seitenansicht der Schwelle gemäß Figur 4, und

Fig. 6      eine perspektivische Darstellung einer Verbindung zweier Platten über einen Steckdübel.

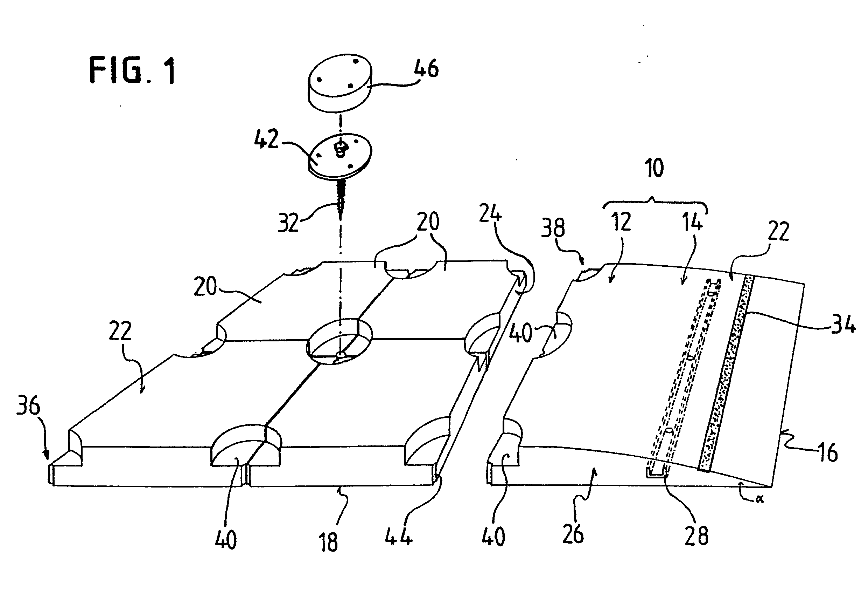

Anhand der Figuren 1 bis 3 soll ein erstes Ausführungsbeispiel der fahrdynamischen Schwelle erläutert werden, die Figuren zeigen einen Teil einer derartigen Schwelle in einem Zustand während der Montage. Es ist lediglich eine Rampenplatte 10 gezeigt, für eine vollständige Schwelle sind jedoch stets mindestens zwei derartiger Rampenplatten 10 und mindestens eine Zwischenplatte 20 notwendig.

Die Rampenplatte 10 setzt sich einstückig aus einem Schwellenbereich 12 mit konstanter Höhe, nämlich der Schwellenhöhe, und einem Keilbereich 14 zusammen, der ausgehend von der Schwellenhöhe in einem sehr spitzen Winkel und an einer Anfahrkante 16 in die Ebene der Unterfläche 18 ausläuft. Jeweils links in den Figuren sind Zwischenplatten 20 gezeigt, von denen in der dargestellten Teilschwelle vier Stück zu sehen sind. Sie haben eine ebene obere Fahrfläche 22, ihre Dicke entspricht der Schwellenhöhe. Die meisten in der Praxis vorkommenden Schwellen lassen sich bereits durch eine Zusammenstellung der bisher besprochenen Elemente, nämlich Rampenplatten 10 und Zwischenplatten 20 realisieren.

Der Ausdruck "Platte" soll die flache, tafelförmige Ausbildung der beiden Platten 10, 20 verdeutlichen. Beide Platten 10, 20 haben prismatische Form, also einen im wesentlichen konstanten Querschnitt über ihre Länge. Die Zwischenplatte 20 ist zudem quaderförmig. Die Platten 10, 20 sind flach, d.h. ihre Höhe ist deutlich geringer als ihre Breite oder Länge, im gezeigten Ausführungsbeispiel ist die Schwellenhöhe etwa ein Fünftel der Längenabmessung der Zwischenplatten 20. Die Länge der Rampenplatte 10 ist doppelt so groß wie die Länge (und auch Breite) der Zwischenplatten 20. Auch die (in Fahrtrichtung eines Kraftfahrzeugs bestimmte) Länge der Rampenplatte 10 ist deutlich größer als die Länge (und Breite) der Zwischenplatte 20, im vorliegenden Beispiel beträgt das Übermaß fünfzig Prozent. Typische Längenabmessungen für die Zwischenplatte 20 sind fünfzig Zentimeter mal fünfzig Zentimeter. Die Platten 10, 20 haben vertikale Schmalflächen 24, 26, an denen sie im verlegten Zustand unter weitgehender gegenseitiger Berührung aneinandergrenzen.

Die Platten 10, 20 sind aus einem Recycling-Gummi gefertigt, im konkreten Ausführungsbeispiel wird ein lineares Gummimaterial in Form von Krüllschnitt verwendet, das über geeignete Mittel zusammengehalten wird. Hierzu wird auf die DE-C-17 20 059 verwiesen. Der Kraftabbaufaktor des verwendeten Recycling-Gummi liegt im Bereich von vierzig Prozent bis sechzig Prozent gegenüber einem Sandbett mit Standardkörnung.

In der Rampenplatte 10 ist innerhalb des Keilbereichs 14 und etwa in Mitte der Länge dieses Keilbereichs 14 eine starre Armierungsleiste 28 in Form eines U-Stahlprofils eingebettet. Sie erstreckt sich über die gesamte Länge der Rampenplatte 10, wodurch ihre Stirnenden von außen sichtbar sind. In einer geänderten Ausbildung ist sie etwas kürzer als die Rampenplatte 10 bemessen, so daß ihre Stirnbereiche im Vollmaterial des Recycling-Gummis eingebettet und geschützt sind. In der Armierungsleiste 28 sind Schraubenlöcher 30 vorgesehen, durch die Holzschrauben wie die in Figur 1 gezeigte Schraube 32 gesteckt werden können. An die Schraubenlöcher 30 schließen sich jeweils nach unten und nach oben Kanäle für die Schraubenführung an, wobei der nach oben verlaufende Kanal einen ausreichenden Innendurchmesser hat, um den Schraubenkopf durchzustecken und die Schraube 32 anziehen zu können. Dieser Kanal wird bei Abschluß der Montage durch Stopfen (nicht dargestellt) verschlossen.

Die Befestigung der erfindungsgemäßen Schwellen erfolgt ausschließlich durch Schrauben 32. Hierzu werden vor der Montage in den Untergrund Löcher gebohrt, der Untergrund hat üblicherweise eine ausreichende Festigkeit, da er zumeist durch Beton oder Bitumen gebildet wird. In die Bohrlöcher werden in bekannter Weise Dübel eingesetzt, die sich beim Eindrehen der Schraube 32 spreizen und ihr einen sicheren Halt bieten. Verschraubungskräfte von beispielsweise 16 kN pro Schraube 32 werden erreicht. Insgesamt werden die einzelnen Bauteile der Schwelle durch die Schrauben 32 möglichst vollflächig mit ihren ebenen Unterflächen 18 gegen eine Montagefläche gedrückt.

Das U-Profil der Armierungsleiste 28 hat im gezeigten Ausführungsbeispiel eine Basisbreite von fünf Zentimeter, die Höhe jedes der beiden Schenkel liegt bei etwa der Hälfte dieses Wertes, die Materialstärke liegt zwischen acht und zehn Millimetern. Zusätzlich zu den vorbereiteten Schraubenlöchern 30 mit den anschließenden Kanälen ist es jederzeit möglich, weitere Schraubenlöcher 30 nachträglich zu bohren. Grundsätzlich könnten alle Schraubenlöcher 30 erst während der Montage gebohrt werden.

Wie Figur 1 zeigt, läuft die Fahrfläche 22 des Keilbereichs 14 weich und gerundet in die Fahrfläche 22 des Schwellenbereichs 12 ein. Die Länge des Schwellenbereichs liegt bei einem Drittel der Gesamtlänge der Rampenplatte 10. Der Anfahrwinkel alpha beträgt im gezeigten Ausführungsbeispiel etwa elf Grad.

Im Gegensatz zur Rampenplatte 10 sind die Zwischenplatten 20 nicht armiert, was jedoch grundsätzlich die Möglichkeit, eine Armierung auch dort vorzusehen, nicht ausschließt.

Die Fahrfläche 22 insbesondere der Zwischenplatten 20 kann schwarz oder weiß eingefärbt sein, so daß sich Zebrastreifen zusammenstellen lassen. In die Fahrfläche 22 insbesondere des Keilbereichs 14 der Rampenplatte 10 ist als Reflexionsbereich 34 ein retroreflektierendes Band eingelassen und einvulkanisiert. Es reflektiert das einfallende Licht weitgehend unabhängig vom Einfallswinkel, so daß insbesondere nachts ein Teil des Scheinwerferlichts des Kraftfahrzeugs durch den Reflexionsbereich 34 so zurückgeworfen wird, daß ein Kraftfahrer die Schwelle gut erkennen kann.

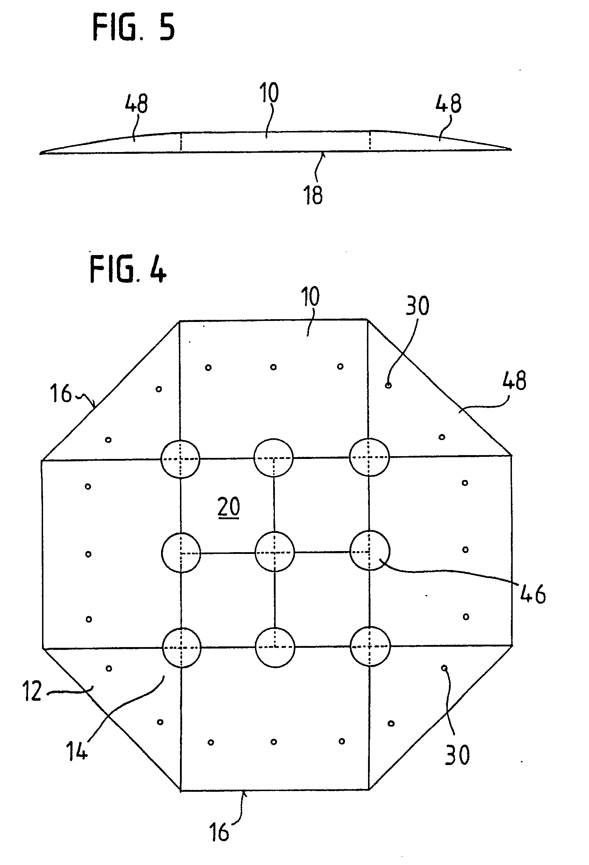

Im folgenden wird ausführlich die Schraubbefestigung der Platten 10, 20 im Bereich ihrer stumpfen Stoßflächen erläutert: Wie die Figuren 1 bis 3 und auch Figur 4 zeigen, haben die Rampenplatten 10 an ihren beiden, von der Anfahrkante 16 entfernten Eckbereichen 36, 38 Aussparungen 40, die als Viertelkreis-Aussparungen ausgebildet sind. Eine weitere, als Halbkreis-Aussparung ausgeführte Aussparung befindet sich auf der Mitte der der Anfahrkante 16 gegenüberliegenden Schmalfläche 24. Die Aussparungen 40 sind jeweils so ausgeführt, daß die Materialdicke ausgehend von der Fahrfläche 22 auf dreißig bis fünfzig Prozent verringert ist, die Unterflächen 18 bleiben also jeweils unberührt. In zusammengesetztem Zustand, wie in Figur 1 für die vier Zwischenplatten 20 und in Figur 4 gezeigt ist, bilden die einzelnen Aussparungen eine gemeinsame, topfförmige Vertiefung mit zylindrischer Begrenzung. In sie wird nach Zusammenschieben der Platten 20 in den Endmontagezustand ein Druckteil 42 eingelegt, das kreisscheibenförmig ist und einen Außendurchmesser hat, der weitgehend dem Innendurchmesser der topfförmigen Gesamtaussparung entspricht. Die Druckteile 42 haben eine zentrische Bohrung, durch die eine Schraube 32 (siehe Figur 1) gesteckt werden kann. Damit diese Schraube bequem durch den darunterliegenden, nicht ausgesparten Bereich der Platten 10, 20 gesteckt werden kann, sind diese an ihren Eckkanten 44 bzw. den entsprechenden Stellen jeweils so ausgespart, daß im zusammengesetzten Zustand der Platten 10, 20 eine Bohrung für den freien Durchgang der Schraube 32 gebildet wird.

Bei einer montierten Schwelle, wie sie beispielsweise in dem Ausführungsbeispiel nach Figur 4 und 5 gezeigt ist, sind die Zwischenplatten 20 seitlich eingespannt, beispielsweise durch Rampenplatten 10, durch einen Bordstein oder dergleichen. Erfindungsgemäß werden die Zwischenplatten 20 also stets von einem ortsfest mit der Montagefläche verschraubten oder anderweitig befestigten (Bordsteinen) Rahmen umgeben, der ein seitliches verrutschen ausschließt. Die Druckteile 42 haben einen Durchmesser, der etwa bei einem Drittel der Längenabmessung der Zwischenplatten 20 liegt. In einem konkreten Ausführungsbeispiel werden scheibenförmige Druckteile 42 mit zwanzig Zentimeter Durchmesser benutzt. Die Materialstärke beträgt acht Millimeter.

Der oberhalb des Druckteils 42 bis in die Ebene der Fahrfläche 22 verbleibende Bereich wird durch einen Stopfen 46 gefüllt, der mit dem Druckteil 42 verbunden werden kann. Im gezeigten Ausführungsbeispiel hat das Druckteil 42 drei Innengewindebohrungen, in die Imbusschrauben eingedreht werden können, die sich im Stopfen 46 abstützen. Der Stopfen 46 ist armiert.

Bei der in den Figuren 4 und 5 gezeigten Schwelle werden zusätzlich zu den bislang besprochenen Bauteilen Eckrampenplatten 48 eingesetzt, die prinzipiell denselben Aufbau wie die Rampenplatten 10 haben, deren Grundfläche jedoch einem gleichschenklig-rechtwinkligen Dreieck entspricht. Sie haben lediglich an ihrer inneren Eckkante 44, an der sich der rechte Winkel befindet, eine Aussparung 40, die Anfahrkante 16 und die Armierungsleiste 28 verlaufen im fünfundvierzig-Grad-Winkel zu den beiden Schmalflächen 26. Die Krümmung der Fahrfläche 22 ist so gewählt, daß auch seitlich im Übergang zu den Rampenplatten 10 keine Knickstellen auftreten.

Figur 4 zeigt deutlich das Quadratnetz der punktuellen Befestigung über die Schrauben 32. Diese sind in Figur 4 nicht ersichtlich, da die topfförmigen Gesamtausnehmungen bereits durch Stopfen 46 abgeschlossen sind, jedoch sind die Grenzlinien der einzelnen Platten 10, 20 und 48 durchgezeichnet. Hieraus und aus Figur 1 wird ersichtlich, daß sich die vorbereiteten Löcher für die Schrauben 32 in den Schnittpunkten der Grenzlinien, genauer gesagt auf den Schnittlinien der Schmalflächen 24, 26 benachbarter Platten 10, 20, 48 befinden.

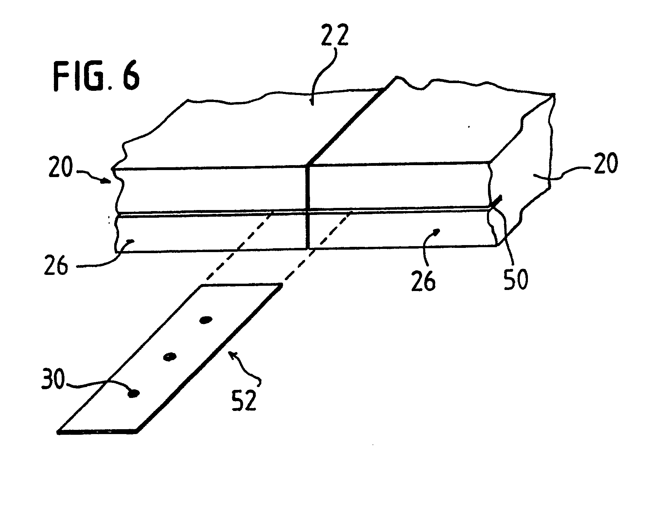

In Figur 6 ist schließlich eine andere Ausbildung der Verbindung von Schwellenbereichen 12 untereinander oder mit Zwischenplatten 20 gezeigt, die benutzte Steckverbindung entspricht dabei weitgehend der Steckverbindung gemäß der DE-A- 34 05 628. Im konkreten Ausführungsbeispiel sind in den Schmalflächen 24, 26 flache, relativ tiefe Kanäle 50 vorgesehen, in die ein Steckverbinder 52 so eingeschoben werden kann, daß er benachbarte Platten 10, 20, 48 verbindet. Im Mittelbereich, also der Grenzlinie zwischen den Platten 10, 20, 48 hat der Steckverbinder 52 mindestens eine Bohrung für eine verschraubung, wie sie bereits oben beschrieben wurde. Im übrigen entspricht der Steckverbinder weitestgehend dem Druckteil 42, allerdings entfällt ein Stopfen. Andere Steckverbinder, insbesondere in speziell vorgesehe Taschen am Ort der Kanäle 50 einsetzbare Steckverbinder entsprechend Figur 8 der genannten Offenlegungsschrift sind grundsätzlich möglich.

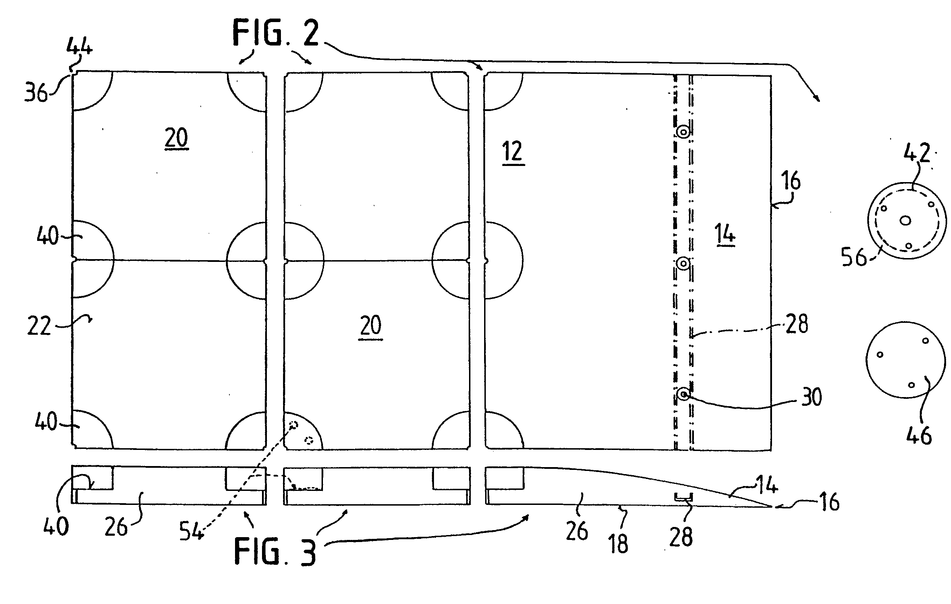

Als sehr vorteilhaft hat es sich erwiesen, auf der ebenen, zur Fahrfläche 22 parallelen Begrenzungsfläche der Aussparung 40 flache, leicht linsenförmig gewölbte Vorsprünge 54 vorzusehen (siehe Figur 3 unten), die sicherstellen, daß das scheibenförmige Druckteil 42 auch bei Herstellungstoleranzen und Montageungenauigkeiten an allen Aussparungen 40 benachbarter, zu verbindender Platten ausreichend anliegt. In einer bevorzugten Ausbildung (Figur 3) sind diese Vorsprünge 54 von oben gesehen rund. Es sind mehrere Vorsprünge 54 auf einer Aussparung 40 vorgesehen. Alternativ oder ergänzend hierzu kann am Druckteil, wie Figur 2 zeigt, ein äußerer, nach unten vorspringender Rand 56 vorgesehen sein, der eine anfängliche, randseitige Auflage der Druckteile 42 an den ebenen Aussparungen 40 erzwingt.

## Ansprüche

1. Fahrdynamische Schwelle für Kraftverkehrswege bestehend aus einem im wesentlichen prismatischen, flachen und eine ebene Unterfläche (18) aufweisenden Schwellenkörper aus elastischem Material, der einen Schwellenbereich mit konstanter Höhe (Schwellenhöhe), auf der sich eine ebene, obere Fahrfläche (22) befindet, und vor sowie hinter diesem jeweils einen Keilbereich (14) ausbildet, der ausgehend von der Schwellenhöhe in einem sehr spitzen Winkel und an einer Anfahrkante (16) in die Ebene der Unterfläche (18) ausläuft und in dem eine punktuelle Schraubenbefestigung ermöglichende Schraubenlöcher (30) vorgesehen sind, dadurch gekennzeichnet, daß der Schwellenkörper aus mindestens drei Platten, nämlich mindestens zwei Rampenplatten (10, 48) und mindestens einer Zwischenplatte (20) zusammengesetzt ist, die an Schmalflächen (24, 26) stumpf aneinander gesetzt sind, daß die Rampenplatten (10, 48) einstückig jeweils einen Schwellenbereich (12) und einen Keilbereich (14) ausbilden, daß die Länge des Schwellenbereichs 10 bis 80 % der Länge des Keilbereichs (14) beträgt, daß die Fahrfläche des Keilbereichs (14) weich und gerundet in die ebene Fahrfläche (22) des Schwellenbereichs übergeht, daß im wesentlichen parallel zur Anfahrkante (16) in den Keilbereich (14) eine starre Armierungsleiste (28) in Form eines Stahlprofils eingebettet ist, die sich im wesentlichen über die gesamte Breite der Rampenplatte (10, 48) erstreckt und die mehrere, die punktuelle Schraubenbefestigung ermöglichende Schraubenlöcher (30) aufweist, und daß die mindestens eine zwischen diesen Rampenplatten (10, 48) angeordnete Zwischenplatte (20) eine ebene obere Fahrfläche (22) und eine der Schwellenhöhe entsprechende Dicke aufweist.

2. Schwelle nach Anspruch 1, dadurch gekennzeichnet, daß der Steigungswinkel des Keilbereichs (14) zwischen fünf Grad und fünfzehn Grad, vorzugsweise zwischen sieben Grad und elf Grad liegt.

3. Schwelle nach Anspruch 1 oder 2, dadurch gekennzeichnet, daß in die Fahrfläche (22) des Keilbereichs (14) ein Reflexionsbereich (34), insbesondere eine retroreflektierende Folie eingebettet, insbesondere einvulkanisiert ist.

4. Schwelle nach einem der Ansprüche 1 bis 3, dadurch gekennzeichnet, daß in den Rampenplatten (10) an ihren von der Auffahrkante (16) entfernten Eckbereichen (36) der Fahrfläche (22) und in den Eckbereichen (38) der Fahrfläche (22) der Zwischenplatte (20) Aussparungen (40), insbesondere Viertelkreis-Aussparungen ausgebildet sind, in denen ausgehend von der Fahrfläche (22) die Materialdicke stufenförmig reduziert, insbesondere auf dreißig Prozent bis fünfzig Prozent der Schwellenhöhe reduziert ist und daß ein steifes Druckteil (42), vorzgusweise eine Kreisscheibe und insbesondere aus Stahl von zum Beispiel fünf bis acht Millimeter Materialstärke vorgesehen ist, das formmäßig der geschlossenen Aussparungsfläche zusammengesetzter Platten (10, 20, 48) entspricht und mindestens eine, eine punktuelle Schraubenbefestigung ermöglichende Bohrung aufweist.

5. Schwelle nach einem der Ansprüche 1 bis 4, dadurch gekennzeichnet, daß der Mittelpunkt der Bohrung des Druckteils (42) auf den Schnittlinien der Begrenzungen der Platten (10, 20, 48) liegt.

6. Schwelle nach einem der Ansprüche 1 bis 5, dadurch gekennzeichnet, daß in den Schmalflächen (24, 26) der Platten (10, 20, 48) Taschen, insbesondere Kanäle (50) vorgesehen sind, und daß Steckverbinder (52) mit einer, eine punktuelle Schraubenbefestigung ermöglichenden Bohrung in die Kanäle (50) zweier benachbarter Platten (10, 20, 48) einschiebbar sind.

7. Schwelle nach einem der Ansprüche 1 bis 6, dadurch gekennzeichnet, daß die Zwischenplatten fünfzig Zentimeter Breite und fünfzig Zentimeter Länge aufweisen und daß die Breite der Rampenplatten (10) die zweifache Breite der Zwischenplatten (20) ist.

8. Schwelle nach Anspruch 1, dadurch gekennezichnet, daß die Platten (10, 20) aus einem Recycling-Gummi gefertigt sind und einen Kraftabbaufaktor von 40 bis 60 % gegenüber einem Sandbett mit Standardkörnung aufweisen.

**Claims**

1. Hump taking into account the dynamics of vehicle movement on traffic routes comprising a ramp which is substantially prismatic, flat, has a plain lower surface (18), is made of elastic material, and exhibits a sill section having constant height (ramp height), and a plain upper driving surface (22), and a wedge section (14) located in front of and behind said sill section, respectively, which starting from the ramp height runs at a very flat angle and terminating at a drive-on edge (16) into the plane of the lower surface (18) and which exhibits screw holes (30) for enabling a point-by-point fixation with screws, characterized in that the ramp body is composed of at least two ramp plates (10, 48) and at least one distance plate (20) which are bluntly put together at narrow faces (24, 26), that the ramp plates (10, 48) form in one piece a sill section (12) and a wedge section (14), that the length of the sill section is 10 to 80 % of the length of the wedge section (14), that the driving surface of the wedge section (14) runs smoothly and roundedly into the plain driving surface (22) of the sill section, that a rigid reinforcement strip (28) in form of a steel profile is embedded in the wedge section (14) substantially parallel to the drive-on edge (16) and extends substantially over the complete width of the ramp plate (10, 48) and in which the said screw holes for a point-to-point fixation are privided, and that the at least one distance plate (20) arranged between these ramp plates (10, 48) exhibits a plain upper driving surface (22) and a thickness corresponding to the ramp height.

2. Hump according to claim 1 characterized in that the sloping angle of the wedge section (14) lies between five degrees and fifteen degrees, preferably between seven and eleven degrees.

3. Hump according to claim 1 or 2 characterized in that a reflection area (34), especially retroreflective foil is embedded, preferably is vulcanized, into the driving surface (22) of the wedge section (14).

4. Hump according to one of the claims 1 to 3 characterized in that in the ramp plates (10) on their corner areas (36) located away from the-drive-on edge (16) of the driving surface (22) and in the corner areas (38) of the driving surface (22) of the distance plate (20) recesses (40) - especially quarter-circle recesses - are provided, wherein starting from the driving surface (22) the material thickness is reduced in a step, especially reduced thirty percent to fifty percent of the ramp height and taht a rigid pressure part (42), preferably a circular disk and especially of steel, of for example five to eight millimeters thickness is provided, which shape corresponds to the complete recess surface of the adjoined plates (10, 20, 48) and exhibits at least one borehole for screws.

5. Hump according to one of the claims 1 to 4 characterized in that the center of the borehole of the pressure part (42) is located on the line of intersection of the boundaries of the plates (10, 20, 48).

6. Hump according to claims 1 to 5 characerized in that in the narrow faces (24, 26) of the plates (10, 20, 48) pockets, especially channels (50) are provided, and that plug connectors (52) with a borehole, which makes a point-to-point screw fastening possible, can be inserted into the channels (50) of two adjoining plates (10, 20, 48).

7. Hump according to one of the claims 1 to 6 characterized in that the distance plates exhibit a fifty centimeter width and fifty centimeter length and that the width of the ramp plates (10) is twice the width of the distance plates (20).

8. Hump according to one of the claims 1 to 7 characterized in that the plates (10, 20, 48) are manufactured of a recycling rubber and exhibit a force reduction factor of 40 to 60 % compared with a sandbed of standard granulation.

**Revendications**

1. Dos d'âne respectant la dynamique du mouvement des véhicules sur des voies de circulation se composant d'un corps de dos d'âne plat, essentiellement prismatique et à face inférieure (18) plane en matériau élastique qui forme une section de dos d'âne à hauteur constante (hauteur du dos d'âne) sur laquelle se trouve une surface de roulement supérieure (22) plane et qui forme ainsi devant et derrière cette section une zone conique (14), laquelle, partant de la hauteur du dos d'âne et en formant un angle très pointu, passe sur l'arête de démarrage (16) pour déboucher au niveau de la surface inférieure (18) et dans laquelle des orifices (30) permettant une fixation ponctuelle par des vis sont prévus, caractérisé par le fait que le corps du dos d'âne se compose au moins de trois plaques, à savoir au moins de deux plaques de rampe (10, 48) et d'au moins une plaque intermédiaire (20) lesquelles sont aboutées sur leurs faces étroites (24, 26), que les plaques de rampe (10, 48) en un seul élément forment respectivement une section de dos d'âne (12) et une section conique (14), que la longueur de la section du dos d'âne s'élève à 10 à 80 % de la longueur de la section conique (14), que la surface de roulement de la section conique (14) passe souplement et sans arête à la surface de roulement plane (22) de la section du dos d'âne, qu'un profil armé rigide (28) sous forme d'un profilé en acier est logé dans la section conique (14) de manière pratiquement parallèle à l'arête de démarrage (16), ce profilé s'étendant pour ainsi dire sur toute la largeur des plaques de rampe (10, 48) et présentant des orifices (30) permettant la fixation ponctuelle par vis et que, au moins une plaque intermédiaire (20) placée entre ces plaques de rampe (10, 48) présente une surface de roulement supérieur (22) plane et une épaisseur correspondant à la hauteur du dos d'âne.

2. Dos d'âne selon la revendication 1, caractérisé par le fait que l'angle de pente de la section conique (14) varie entre cinq degrés et quinze degrés, de préférence entre sept degrés et onze degrés.

3. Dos d'âne selon la revendication 1 ou 2, caractérisé par le fait qu'une zone de réflexion (34) se trouve dans la surface de roulement (22) de la section conique (14) et que cette zone contient notamment une feuille rétroréfléchissante et notamment vulcanisée.

4. Dos d'âne selon les revendications 1 à 3, caractérisé par le fait que des évidements (40), notamment des évidements en quart de cercle, sont formés dans les plaques de rampe (10) dans les sections angulaires (36) de la surface de roulement (22) à l'écart de l'arête de montée (16) et dans les sections angulaires (38) de la surface de roulement (22) de la plaque intermédiaire (20) et que, dans ces évidements, partant de la surface de roulement (22), l'épaisseur du matériau est réduite de manière échelonnée, notamment de trente pour cent à cinquante pour cent de la hauteur du dos d'âne et qu'un élément de pression rigide (42), de préférence un disque circulaire, notamment en acier de cinq à huit millimètres d'épaisseur par exemple est prévu, dont la forme correspond à la surface d'évidement fermée formée de plaques assemblées (10, 20, 48) et lequel présente un perçage qui permet une fixation ponctuelle par vis.

5. Dos d'âne selon l'une des revendications 1 à 4, caractérisé par le fait que le point central du perçage de l'élément de pression (42) se trouve sur les interfaces des délimitations des plaques (10, 20, 48).

6. Dos d'âne selon l'une des revendications 1 à 5, caractérisé par le fait que des poches, et notamment des canaux (50), sont prévues dans les surfaces étroites (24, 26) des plaques (10, 20, 48) et que des connecteurs (52) avec un perçage permettant une fixation ponctuelle par vis peuvent être introduits dans les canaux (50) de deux plaques voisines (10, 20, 48).

7. Dos d'âne selon l'une des revendications 1 à 6, caractérisé par le fait que les plaques intermédiaires ont une largeur de cinquante centimètres et une longueur de cinquante centimètres et que la largeur des plaques de, rampe (10) représente le double de la largeur des plaques intermédiaires (20).

8. Dos d'âne selon la revendication 1, caractérisé par le fait que les plaques (10, 20) sont fabriquées à partir d'un caoutchouc recyclable et présentent un facteur de perte de force de 40 à 60 % par comparaison à un lit de sable à granulométrie standard.

**FIG. 1**

EP 0 186 733 B1

FIG. 2

FIG. 3

42
56
46

16
14
28
30
12
20
20
16
14
28
18
26
26
36
44
40
22
40
40
26
54

# FIG. 5

48    10    48

18

# FIG. 4

10    30

16    48

20

46

12

14    30

16

FIG. 6